# EUROPÄISCHE PATENTSCHRIFT

(11) **EP 0 902 208 B1**
(45) Veröffentlichungstag und Bekanntmachung des Hinweises auf die Patenterteilung: **07.08.2002**
(21) Anmeldenummer: 98116347.0
(22) Anmeldetag: 28.08.1998
(51) Int. Cl.: F16D 65/08

(54) **Bremsbacke**
Brake shoe
Mâchoire de frein

(30) Priorität: 10.09.1997 DE 19739709
(43) Veröffentlichungstag der Anmeldung: 17.03.1999
(73) Patentinhaber: FTE automotive GmbH, 96106 Ebern (DE)
(72) Erfinder: Lührs, Ronald, Dipl.-Ing., 96148 Baunach (DE)
(74) Vertreter: Oppermann, Mark, Dipl.-Ing.

(56) Entgegenhaltungen:
- DE-A- 2 004 806
- DE-A- 19 602 061
- US-A- 2 658 473
- US-A- 4 573 249

## Beschreibung

Die Erfindung bezieht sich auf eine Bremsbacke, insbesondere für eine Innenbacken-Trommelbremse für Kraftfahrzeuge, gemäß dem Oberbegriff des Patentanspruchs 1. Insbesondere bezieht sich die Erfindung auf die Ausbildung von Bremsbacken für eine Innenbacken-Trommelbremse in Leichtbauweise.

Innenbacken-Trommelbremsen gelangen bevorzugt in hydraulischen Bremsanlagen für Personenkraftwagen und Nutzfahrzeuge als Zweibacken-Trommelbremse in Simplex-Bauweise massenweise zur Anwendung. Eine derartige Innenbacken-Trommelbremse ist beispielsweise in der nachveröffentlichten DE 196 22 520 C1 der Anmelderin beschrieben. Die in dieser Innenbacken-Trommelbremse verwendeten, im Querschnitt im wesentlichen T-förmigen Bremsbacken weisen jeweils einen Steg auf, an dem ein gebogenes Bremsbelag-Trägerblech befestigt, vornehmlich angeschweißt ist. Während das Bremsbelag-Trägerblech für eine Auflagefläche für den Bremsbelag sorgt, dient der Steg zur Aussteifung des Bremsbelag-Trägerblechs und zur Einleitung von Kräften.

Im Stand der Technik fehlt es nicht an Vorschlägen, wie Bremsbacken auszubilden sind, um als Massenteil einfach bzw. kostengünstig hergestellt werden zu können und/oder eine im Hinblick auf die im Betrieb auftretenden mechanischen Beanspruchungen ausreichende Festigkeit bzw. Steifigkeit aufzuweisen.

So ist aus der DE 38 18 235 A1 eine gegossene Bremsbacke bekannt, die einen ringausschnittförmigen Bremsbackenkörper aufweist, der an einem Ende ein Lagerauge für einen Lagerbolzen und am anderen Ende eine gabelförmige Lagerzapfenaufnahme hat. Der Bremsbackenkörper ist auf seiner Innenseite mit einer sich in Radialrichtung erstreckenden Versteifung in Form von zwei mit Abstand zueinander angeordneten Stegen versehen, die ausgehend vom Lagerauge im wesentlichen schlangenlinienförmig und spiegelbildlich zur mittleren Radialebene der Bremsbacke hin zur Lagerzapfenaufnahme verlaufen.

Obgleich die so ausgebildete Bremsbacke eine hohe Steifigkeit aufweist, ist ein Nachteil dieses Stands der Technik darin zu sehen, daß der Herstellungsaufwand u.a. infolge der erforderlichen Gußformen relativ groß ist.

Entsprechendes gilt für die aus der DE 196 02 061 A1 bekannte, gegossene Leichtmetall-Bremsbacke für eine Kraftfahrzeug-Trommelbremse, die ein teilkreisförmig gebogenes, auf seiner Mantelfläche einen Bremsbelag tragendes Bremsband und einen an der Innenseite des Bremsbands befestigten, sich radial nach innen erstreckenden Befestigungssteg hat, der doppelwandig ausgeführt und zwischen seinen Wänden wabenartig mit Verbindungsstegen versehen ist.

In der DE 42 36 636 A1 wird ein Verfahren zur Herstellung einer Bremsbacke offenbart, bei dem aus einer kreisringförmigen Ronde aus Stahl- oder Aluminiumblech durch Stauchen oder Spalten und anschließendes Flachdrücken ein Ring mit zylindrischer Außenfläche und T-förmigen Querschnitt geformt wird, der in einem Folgeschritt in mehrere, je eine Bremsbacke bildende Ringabschnitte geteilt wird.

Zwar führt dieses Umformverfahren im Umformbereich zu einer Kaltverfestigung des Werkstoffs, die für eine hohe radiale Steifigkeit der Bremsbacke sorgt. Nachteile dieses Stands der Technik bestehen jedoch dahingehend, als für den Umformvorgang verhältnismäßig hohe Energien aufzuwenden sind, der Umformvorgang mehrere Umformschritte beinhaltet und insgesamt eine ungünstige Materialausnutzung vorliegt, weil der Innenbereich der Ronde als Abfallblech anfällt.

Ein - was die Anzahl der Umformschritte angeht - ähnlich aufwendiges Verfahren zur Herstellung eines Bremsschuhs offenbart die DE 30 48 886 A1. Gemäß diesem Stand der Technik wird der Bremsschuhkörper durch mehrfaches Falten oder Biegen eines Zuschnitts eines flachen Plattenmaterials oder eines blechartigen Materials zu einem T-förmigen Querschnitt geformt, bevor der Bremsschuhkörper in einem Walz- oder Preßvorgang in seine gebogene Form gekrümmt wird. Weitere Nachteile bestehen hier darin, daß dem so gewonnenen Bremsschuhkörper für viele Anwendungsbereiche die erforderliche Steifigkeit fehlt und die Faltstellen des Bremsschuhkörpers stark korrosions- und rißgefährdet sind.

Die EP 0 546 262 B1 zeigt eine Bremsbacke, die aus zwei im Querschnitt L-förmigen Profilen aus warm gewalztem Bandstahl besteht. Die Profile haben jeweils einen in radialer Richtung der Bremsbacke verlaufenden Steg und ein sich in axialer Richtung der Bremsbacke erstreckendes Band. Die beiden Stege der Profile liegen aneinander an und sind miteinander vernietet, während die beiden in axialer Richtung der Bremsbacke nach außen weisenden Bänder eine Auflagefläche für den Bremsbelag ausbilden.

Abgesehen davon, daß bei diesem Stand der Technik die Verbindung der beiden L-förmigen Profile einen relativ hohen fertigungstechnischen Aufwand erfordert, sind danach noch besondere Maßnahmen zu treffen, um beim Beschichten der Auflagefläche mit dem Reibmaterial ein Eindringen des Reibmaterials in den Spalt zwischen den aneinander anliegenden Profilen zu verhindern.

Entsprechend aufwendig in das in der JP 56-167930 A offenbarte Verfahren, gemäß dem zur Ausbildung einer Bremsbacke zwei L-förmige Profile zusammen mit dem Bremsbelag verklebt werden.

Aus der DE 29 43 955 A1 ist eine Bremsbacke bekannt, die eine gebogene Platte aufweist, an deren Außenumfangsseite ein Bremsbelag befestigt ist und an deren Innenumfangsseite zwei gekrümmte Rippen angeschweißt sind, die sich nach radial innen erstrecken und parallel in einem axialen Abstand voneinander angeordnet sind.

Auch die Herstellung dieser Bremsbacke ist relativ aufwendig, weil die gekrümmte Platte und die Rippen jeweils getrennt in mehreren Arbeitsgängen fertiggestellt werden, bevor sie in einer entsprechenden Vorrichtung zueinander ausgerichtet und miteinander verschweißt werden.

Entsprechendes gilt für die spanlos hergestellte Bremsbacke, die aus der den Oberbegriff des Patentanspruchs 1 bildenden DE 20 04 806 A bekannt ist. Diese besteht aus einem gebogenen, doppelstegigen T-Profil aus vorzugsweise Stahl, an dessen einem Ende ein Lagerbeschlag mit zwei Flanschen zwischen den Stegen des doppelstegigen T-Profils mittels Schweißpunkten angebracht ist, während am anderen Ende ein Betätigungsbeschlag in gleicher Weise befestigt ist. Die Stege sind mit dem Fußabschnitt des doppelstegigen T-Profils mit einer Mehrzahl von beabstandeten Versteifungsbändern verbunden, die jeweils am Fußabschnitt und an den Stegen angeschweißt sind.

Schließlich zeigt die WO 94/11648 einen im wesentlichen kreisringförmigen Bremsschuh für eine Bremstrommel, der zwei gekrümmte Bremsbeläge trägt und durch ein gefaltetes, kastenförmiges Profil aus Stahlblech gebildet ist, welches nach radial innen offen ist. Bei diesem Bremsschuh wird die Elastizität des Profils zum Erhalt des Lüftspiels im unbetätigten Zustand der Bremse genutzt.

Diese Konstruktion hat sich jedoch nicht bewährt, weil die für ein ausreichendes Bremsmoment vom Profil zu übertragende Kraft ein Widerstandsmoment des Profils erfordert, welches nur durch Materialdicken des Profils zu erzielen ist, die bei den hier betrachteten Anwendungen zu einem vorzeitigen Dauerbruch des Bremsschuhs führen würden.

Zusammenfassend ist festzustellen, daß nach wie vor ein Bedarf für eine ausreichend stabile Bremsbacke besteht, die sich günstig herstellen läßt.

Gegenüber dem oben beschriebenen Stand der Technik liegt der Erfindung daher die Aufgabe zugrunde, eine Bremsbacke zu schaffen, die bei ausreichender Festigkeit bzw. Steifigkeit im Vergleich zum Stand der Technik einfacher ausgebildet werden kann.

Diese Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 10.

Erfindungsgemäß besteht bei einer einen gekrümmten Bremsbelagträger und eine sich davon weg erstreckende Aussteifung aufweisenden Bremsbacke, die aus einem Halbzeug in Form eines doppelstegigen T-Profils gebildet ist, dessen Fußabschnitt den Bremsbelagträger ausbildet, die Aussteifung aus den zwei Stegabschnitten des doppelstegigen T-Profils, welche an ihren vom Fußabschnitt abgewandten Enden unter Ausbildung eines Verbundstegs zumindest bereichsweise flächig aneinanderliegen und mit dem Fußabschnitt einen Hohlraum begrenzen.

Die erfindungsgemäße Bremsbacke läßt sich sehr wirtschaftlich fertigen, da ein vorgefertigtes Halbzeug in Form des doppelstegigen T-Profils Verwendung findet, welches zur Ausbildung des gekrümmten Bremsbelagträgers lediglich gebogen werden muß, was beispielsweise mittels Gesenkbiegen erfolgen kann. Abgesehen davon, daß dabei infolge des maßgenauen doppelstegigen T-Profils und einer geringen Oberflächenverformung an der Trägerfläche des Bremsbelagträgers eine hohe Maßgenauigkeit bzw. Ebenheit der Bremsbacke bereits ohne Nachbearbeitung erzielt wird, muß bei Herstellung der erfindungsgemäßen Bremsbacke im Gegensatz zum Stand der Technik gemäß beispielsweise der DE 29 43 955 A1 auch nur ein Teil, nämlich das abgelängte doppelstegige T-Profil gehandhabt werden. Zur kostengünstigen Herstellung der erfindungsgemäßen Bremsbacke trägt ferner bei, daß im Gegensatz zum Stand der Technik gemäß beispielsweise der DE 42 36 636 A1 eine hohe Materialausnutzung vorliegt, weil lediglich ein geringer Materialabfall anfällt, wenn die Bremsbacke trennend und/oder spanabhebend fertigbearbeitet wird, um den Stegabschnitten eine vorbestimmte Kontur zu geben bzw. Befestigungslöcher für den Bremsbelag und/oder die Betätigungselemente der Bremse auszubilden. Weiterhin geht mit dem Biegen des doppelstegigen T-Profils eine Kaltverfestigung des Werkstoffs vornehmlich im Bereich der Aussteifung einher, die im Hinblick auf die im Betrieb auftretenden Kräfte für eine ausreichende Festigkeit bzw. Steifigkeit der Bremsbacke sorgt. Da die Stegabschnitte an ihren vom Fußabschnitt abgewandten Enden unter Ausbildung eines Verbundstegs zumindest bereichsweise flächig aneinander und mit dem Fußabschnitt einen Hohlraum begrenzen, liegt eine Querschnittsform der Bremsbacke vor, die zum einen leicht durch Drücken der Stegabschnitte auszubilden ist, was mittels eines geeignet profilierten Werkzeugs vorteilhaft in einem Arbeitsgang mit dem oben angesprochenen Biegen des doppelstegigen T-Profils erfolgen kann. Die Bremsbacke weist zum anderen im Ergebnis eine relativ hohe Torsionssteifigkeit auf, so daß sie Torsionsmomente sicher und ohne Verwindung aufnehmen kann, die im Betrieb der Bremse bei hohen Reibmomenten durch außermittige Abstützung der Bremsbacke entstehen können. Hier trägt die Bremsbacke auch zu einer Geräuschreduzierung der Bremse bei, weil ein unbeabsichtigter Eingriff der Bremsbacke mit der Bremstrommel, der eine Ursache für Quietschgeräusche infolge von Reibschwingungen ist, aufgrund der verwindungssteifen Struktur der Bremsbacke vermieden wird.

In den Patentansprüchen 2 bis 6 sind weitere Merkmale angegeben, die für eine zusätzliche Erhöhung der Torsionssteifigkeit bzw. für eine Erhöhung der Festigkeit der Bremsbacke sorgen.

Die nach der Lehre des Patentanspruchs 2 vorgesehenen abgewinkelten Stegrandbereiche können beim Biegen des doppelstegigen T-Profils mittels eines geeignet geformten Werkzeugs einfach mit ausgebildet werden.

Die im Patentanspruch 4 angegebene form- und/oder kraftschlüssige Verbindung der Stegabschnitte mit einem klammerförmigen Armierungselement aus Stahl ist kostengünstig realisierbar. Wenn das Armierungselement in einer Ausnehmung für die Druckstange der Feststellbremse und/oder an einem Krafteinleitungsabschnitt für den Kolben des Radbremszylinders und/oder an einem Anlageabschnitt für das Widerlager angeordnet ist, ist die Bremsbacke am jeweiligen Bereich in vorteilhafter Weise weniger verschleißgefährdet.

Gemäß dem Patentanspruch 5 sind die Stegabschnitte im Bereich des Verbundstegs mittels mindestens eines durch Durchsetzfügen oder Stanznieten ausgebildeten Verbindungspunkts verbunden. Neben der Tatsache, daß diese Verbindungspunkte relativ hohen Längs- und Querkräften ohne Schädigung widerstehen können, sind die angesprochenen Verfahren insbesondere im Hinblick auf eine Optimierung der Herstellung der Bremsbacken von Vorteil, weil die zur Ausbildung der Verbindungspunkte jeweils benötigte Vorrichtung ohne Probleme in das Umformwerkzeug für das doppelstegige T-Profil integrierbar ist, so daß die Verbindungspunkte ohne Umspannen der Bremsbacken ausgebildet werden können.

Wenn gemäß dem Patentanspruch 6 der Fußabschnitt zwischen den Stegabschnitten mit einer Materialaufwerfung versehen ist, an der die Stegabschnitte zumindest linienförmig anliegen, werden die bei Einleitung eines Torsionsmoments in die Bremsbacke in der Aussteifung auftretenden Kräften in vorteilhafter Weise zusätzlich gegenüber dem Bremsbelagträger abgestützt. Gemäß einer einfachen Ausbildung der Materialaufwerfung weist diese einen im wesentlichen halbkreisförmigen Querschnitt auf.

Nach der Lehre des Patentanspruchs 7 verlaufen die vom Fußabschnitt abgewandten Enden der Stegabschnitte zumindest bereichsweise beabstandet voneinander und begrenzen eine Öffnung zur Aufnahme eines Handbremshebels, der an in den Stegabschnitten ausgebildeten Lagerstellen gelagert ist. Diese Ausbildung der Bremsbacke hat den Vorteil, daß beim Spannen bzw. Betätigen der Handbremse über den Handbremshebel im Gegensatz zum Stand der Technik im wesentlichen mittig eine Querkraft in die Bremsbacke eingeleitet wird, die somit kein die Bremsbacke verwindendes Torsionsmoment erzeugt.

Gemäß dem Patentanspruch 8 gehen die Stegabschnitte im Querschnitt des Halbzeugs mit Übergangsradien in den Fußabschnitt über, wobei die zwischen den Stegabschnitten liegenden Übergangsradien kleiner sind als die äußeren Übergangsradien, so daß bei Ausbildung der erfindungsgemäßen Querschnittsform der Bremsbacke mittels Kaltverformung nur ein relativ kleiner Umformkraftbedarf besteht.

Der Patentanspruch 9 sieht vor, daß das doppelstegige T-Profil aus einer Aluminiumlegierung, vorzugsweise einer Aluminium-Knetlegierung besteht, was im Hinblick auf die Ausbildung einer Innenbacken-Trommelbremse in Leichtbauweise von Vorteil ist. Dabei kann das doppelstegige T-Profil mittels Strangpressen besonders kostengünstig hergestellt werden.

Gemäß dem Patentanspruch 10 sind der Bremsbelagträger und die Aussteifung schließlich anodisch oxydiert, so daß die Bremsbacke eine verschleißfeste Oberfläche aufweist sowie einfach und dauerhaft gegen Korrosion behandelt ist.

Die Erfindung wird nachstehend anhand bevorzugter Ausführungsbeispiele unter Bezugnahme auf die Zeichnung näher erläutert, wobei gleiche oder ähnliche Teile mit gleichen Bezugszeichen versehen sind. Dabei zeigen:
Die Fig. 1 eine Seitenansicht einer Bremsbacke gemäß einem ersten Ausführungsbeispiel der Erfindung ohne Bremsbelag,
die Fig. 2A eine Seitenansicht der Bremsbacke nach Fig. 1 vor Ausbildung der gestrichelt dargestellten endgültigen Kontur der Aussteifung bzw. des Bremsbelagträgers,
die Fig. 2B eine Schnittansicht des für die Bremsbacke nach Fig. 1 verwendeten Halbzeugs in Form eines doppelstegigen T-Profils,
die Fig. 2C eine Schnittansicht der bereits gebogenen und gedrückten Bremsbacke nach Fig. 1 vor Ausbildung von Verbindungspunkten im Verbundsteg,
die Fig. 2D eine Schnittansicht entlang Linie A-A in Fig. 2A, wobei insbesondere ein mittels Durchsetzfügen ausgebildeter Verbindungspunkt dargestellt ist,
die Fig. 3A eine der Fig. 2B entsprechende Schnittansicht des für eine Bremsbacke gemäß einem zweiten Ausführungsbeispiel der Erfindung verwendeten Halbzeugs in Form eines doppelstegigen T-Profils mit einer Materialaufwerfung zwischen den Stegabschnitten,
die Fig. 3B eine der Fig. 2C entsprechende Schnittansicht der bereits gebogenen und gedrückten Bremsbacke gemäß dem zweiten Ausführungsbeispiel vor Ausbildung von Verbindungspunkten im Verbundsteg,
die Fig. 3C eine der Fig. 2D entsprechende Schnittansicht der Bremsbacke gemäß dem zweiten Ausführungsbeispiel, wobei insbesondere ein mittels Stanznieten ausgebildeter Verbindungspunkt dargestellt ist,
die Fig. 3D eine der Fig. 2C bzw. 3B entsprechende Schnittansicht einer bereits gebogenen und gedrückten Bremsbacke gemäß einem dritten Ausführungsbeispiel der Erfindung vor Ausbildung von Verbindungspunkten im Verbundsteg, wobei die Stegabschnitte an ihren vom Fußabschnitt abgewandten Enden abgewinkelte Stegrandbereiche aufweisen,
die Fig. 3E eine der Fig. 2D bzw. 3C entsprechende Schnittansicht der Bremsbacke gemäß dem dritten Ausführungsbeispiel,
die Fig. 4A eine Seitenansicht einer Bremsbacke gemäß einem vierten Ausführungsbeispiel der Erfindung, wobei zwischen den Stegabschnitten ein Handbremshebel angelenkt ist, und
die Fig. 4B eine Draufsicht auf die Bremsbacke nach Fig. 4A.

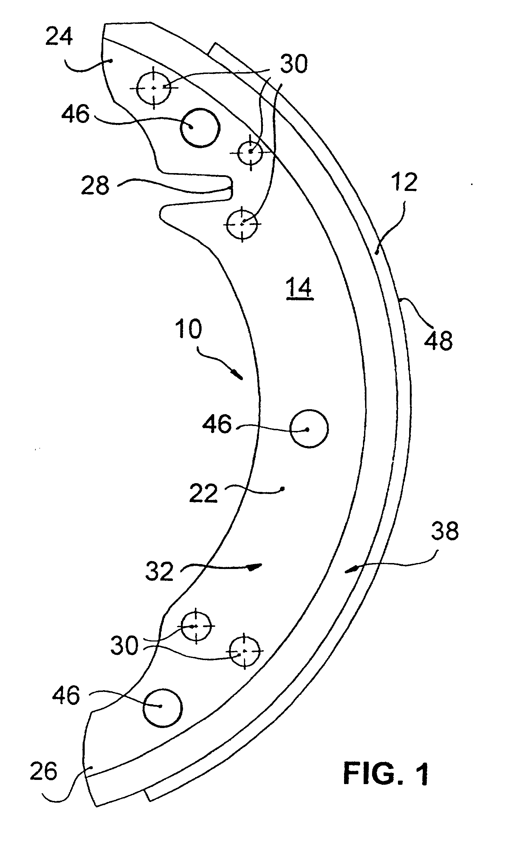

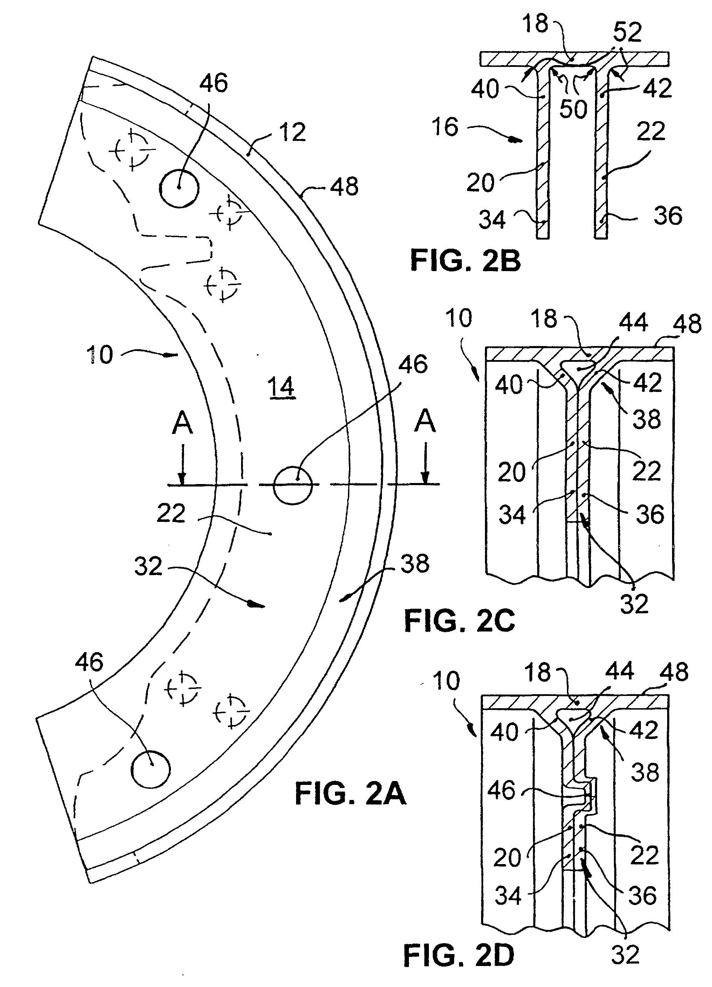

Die Fig. 1 bis 2D betreffen eine Bremsbacke 10 für eine Innenbacken-Trommelbremse für Kraftfahrzeuge gemäß einem ersten Ausführungsbeispiel. Wie insbesondere den Fig. 1 und 2B zu entnehmen ist, hat die Bremsbacke 10 einen gekrümmten Bremsbelagträger 12 und eine sich davon weg erstreckende Aussteifung 14, wobei die Bremsbacke 10 aus einem Halbzeug in Form eines doppelstegigen T-Profils 16 gebildet ist, dessen Fußabschnitt 18 den Bremsbelagträger 12 und dessen zwei Stegabschnitte 20, 22 die Aussteifung 14 ausbilden.

Gemäß Fig. 1 hat die Bremsbacke 10 im wesentlichen die Form eines Segments eines Kreisrings. In an sich bekannter Weise (DE 196 22 520 C1) dient das eine Ende 24 des Kreisringsegments als Krafteinleitungsabschnitt für einen Kolben eines Radbremszylinders der Trommelbremse, während das andere Ende 26 des Kreisringsegments einen Anlageabschnitt für ein Widerlager der Trommelbremse ausbildet. Weiterhin ist die Bremsbacke 10 im Bereich der Aussteifung 14 in an sich bekannter Weise mit einer Ausnehmung 28 für eine Druckstange einer Feststellbremse versehen. Schließlich ist in der Aussteifung 14 eine Mehrzahl von Löchern 30 eingebracht, die ebenfalls in an sich bekannter Weise der Anlenkung weiterer Betätigungselemente bzw. der Befestigung von Zugfedern dienen.

Die Aussteifung 14 besteht in radialer Richtung der Bremsbacke 10 aus zwei Abschnitten, die unter Bezugnahme auf die weiteren Figuren noch näher beschrieben werden. Den radial inneren Abschnitt der Aussteifung 14 bildet ein Verbundsteg 32 aus, der aus den flächig aneinanderliegenden, vom Fußabschnitt 18 abgewandten Enden 34, 36 der Stegabschnitte 20, 22 des doppelstegigen T-Profils 16 (Fig. 2B) besteht. Der radial äußere Abschnitt 38 der Aussteifung 14 wird durch Basisabschnitte 40, 42 der Stegabschnitte 20, 22 des doppelstegigen T-Profils 16 (Fig. 2B) ausgebildet, die mit dem Fußabschnitt 18 des doppelstegigen T-Profils 16 einen Hohlraum 44 (Fig. 2C) begrenzen.

Ferner sind der Fig. 1 noch drei Verbindungspunkte 46 zu entnehmen, die die Stegabschnitte 20, 22 des doppelstegigen T-Profils 16 im Bereich des Verbundstegs 32 im dargestellten Ausführungsbeispiel formschlüssig miteinander verbinden. Die Verbindungspunkte 46 sind vorzugsweise in Bereichen höherer Beanspruchung der Bremsbacke 10 angeordnet. So liegt der in Fig. 1 obere Verbindungspunkt 46 in der Nähe des Endes 24 der Bremsbacke 10, das der Einleitung von Betätigungskräften dient, während der in Fig. 1 untere Verbindungspunkt 46 sich nahe dem Ende 26 der Bremsbacke 10 befindet, an dem die Reaktionskräfte des Widerlagers wirken. Der in Fig. 1 mittlere Verbindungspunkt 46 wirkt einem Aufbiegen des Verbundstegs 32 infolge von an der Bremsbacke 10 wirkenden Torsionsmomenten entgegen. Weitere Verbindungspunkte können in der Nähe der Löcher 30 ausgebildet werden, über die auch eine Einleitung von Kräften in die Bremsbacke 10 erfolgt.

Die radial äußere Umfangsfläche des Bremsbelagträgers 12 bildet schließlich eine Trägerfläche 48 für den Bremsbelag aus, der in den Figuren nicht dargestellt ist. Der Bremsbelag kann an der Trägerfläche 48 als Beschichtung aufgebracht oder mit geeigneten Mitteln befestigt werden, beispielsweise mit Klebstoff oder Nieten, die Löcher in dem Bremsbelagträger 12 und dem Bremsbelag durchgreifen.

In Fig. 2B ist das aus vorzugsweise einer Aluminium-Knetlegierung bestehende, doppelstegige T-Profil 16 für die Bremsbacke 10 im Querschnitt dargestellt, bevor es zur Ausbildung der Bremsbacke 10 gebogen bzw. gedrückt wird. Ein solches doppelstegiges T-Profil 16 kann mittels Strangpressen günstig hergestellt werden und ist danach zunächst gerade.

Die vorläufig noch parallelen Stegabschnitte 20, 22 sind symmetrisch bezüglich einer Mittelebene des doppelstegigen T-Profils 16 angeordnet, die sich senkrecht zum Fußabschnitt 18 erstreckt, und schließen im unverformten Zustand mit dem Fußabschnitt 18 jeweils einen rechten Winkel ein. Dabei gehen die Stegabschnitte 20, 22 mit Übergangsradien 50, 52 in den Fußabschnitt 18 über, wobei die zwischen den Stegabschnitten 20, 22 liegenden Übergangsradien 50 kleiner sind als die äußeren Übergangsradien 52, was insbesondere für das spätere Drücken der Stegabschnitte 20, 22 von Vorteil ist, weil hier nur relativ geringe Umformkräfte notwendig sind und eine Rißbildung im Übergangsbereich zwischen den Stegabschnitten 20, 22 und dem Fußabschnitt 18 vermieden wird.

Das derartig geformte doppelstegige T-Profil 16 wird zur Ausbildung der Bremsbacke 10 zunächst abgelängt. Der Fußabschnitt 18 des abgelängten doppelstegigen T-Profils 16 bildet nunmehr eine rechteckige Platte aus, während die Enden des abgelängten doppelstegigen T-Profils 16 senkrecht zum Fußabschnitt 18 verlaufen.

Nach Ablängen wird das doppelstegige T-Profil 16 einem kalten Biegevorgang und vorzugsweise im selben Arbeitsschritt einem Drück- bzw. Stauchvorgang unterzogen, so daß sich die in den Fig. 1 und 2A dargestellte Form eines Kreisringsegments mit dem in Fig. 2C dargestellten Querschnitt ergibt. Die radiale äußere Bogenlänge des Kreisringsegments entspricht nun im wesentlichen der Länge des abgelängten doppelstegigen T-Profils 16 vor dem Biegevorgang, während die radial innere Bogenlänge des Kreisringsegments deutlich kleiner ist als die radial äußere Bogenlänge. Im Ergebnis ist die Bremsbacke 10 im Bereich des Verbundstegs 32 kaltverfestigt. Eine geringfügige Verformung im Bereich des Bremsbelagträgers 12 sorgt auch ohne Nachbearbeitung für eine ebene Trägerfläche 48 für den Bremsbelag.

Wie der Fig. 2C zu entnehmen ist, sind durch den Drück- bzw. Stauchvorgang die Enden 34, 36 der Stegabschnitte 20, 22 in flächige bzw. planparallele Anlage gebracht worden, während die Basisabschnitte 40, 42 der Stegabschnitte 20, 22 mit dem Fußabschnitt 18 einen Hohlraum 44 begrenzen bzw. einen Kasten ausbilden. Der Querschnitt des Hohlraums 44 hat im dargestellten Ausführungsbeispiel die Form eines gleichschenkligen Dreiecks, kann aber den Erfordernissen entsprechend auch andere Querschnittsformen haben, solange ein im Hinblick auf die im Betrieb auftretenden Spannungen ausreichendes Widerstandsmoment der Bremsbacke 10 gewährleistet wird. Hier ist es beispielsweise auch denkbar, daß der Querschnitt des Hohlraums sich über den Umfang der Bremsbacke verändert oder daß der Hohlraum zumindest teilweise auf der dem Fußabschnitt abgewandten Seite offen ist.

Nun werden die Stegabschnitte 20, 22 im Bereich des Verbundstegs 32 durch die Verbindungspunkte 46 unlösbar verbunden. Hier eignen sich insbesondere die im wesentlichen formschlüssigen Verbindungsverfahren Durchsetzfügen und Stanznieten. Diese Verfahren zählen zum Stand der Technik (vergl. insbesondere die EP 0 215 449 B1) und werden daher nicht näher beschrieben.

In Fig. 2D ist ein mittels Durchsetzfügen ausgebildeter Verbindungspunkt 46 dargestellt. Der Verbindungspunkt 46 besteht aus einer becherförmigen Vertiefung des Stegabschnitts 20, die sich in den Stegabschnitt 22 hinein erstreckt und dort in einer becherförmigen Vertiefung des Stegabschnitts 22 fest eingespannt ist.

Die Fig. 2A zeigt die Bremsbacke 10 nach Ausbildung der Verbindungspunkte 46. Nun sind entsprechend den gestrichelten Linien in Fig. 2A noch die endgültige Außenkontur der Bremsbacke 10 sowie die Löcher 30 auszubilden, was prinzipiell trennend oder spanabhebend möglich ist, vorzugsweise aber mittels eines Stanzvorgangs erfolgen sollte.

Schließlich wird die soweit fertiggestellte Bremsbacke 10 noch anodisch oxydiert. Hierzu bedient man sich eines Bads, so daß die Bremsbacke 10 auch im Hohlraum 44 oberflächenbehandelt ist.

Obgleich in der vorangehenden Beschreibung die Verbindung der Stegabschnitte 20, 22 im Bereich des Verbundstegs 32 durch mittels Durchsetzfügen oder Stanznieten ausgebildeter Verbindungspunkte 46 beschrieben wurde, können die Stegabschnitte 20, 22 zur weiteren Aussteifung der Bremsbacke 10 zusätzlich oder anstelle der Verbindungspunkte 46 auch mit Hilfe von vorzugsweise klammerförmigen Armierungselementen (nicht dargestellt) aus Stahl im wesentlichen kraftschlüssig verbunden werden. Dabei können die Armierungselemente abgekröpfte Enden aufweisen, die in weitere Löcher der Stegabschnitte 20, 22 eingreifen, um den Kraftschluß noch mit einem Formschluß zu überlagern. Von Vorteil ist es, wenn die Armierungselemente an einem oder mehreren der beschriebenen Krafteinleitungsbereiche der Bremsbacke 10 positioniert sind, um an diesen Bereichen eine direkte, hohe Flächenbelastung der Stegabschnitte 20, 22 zu vermeiden.

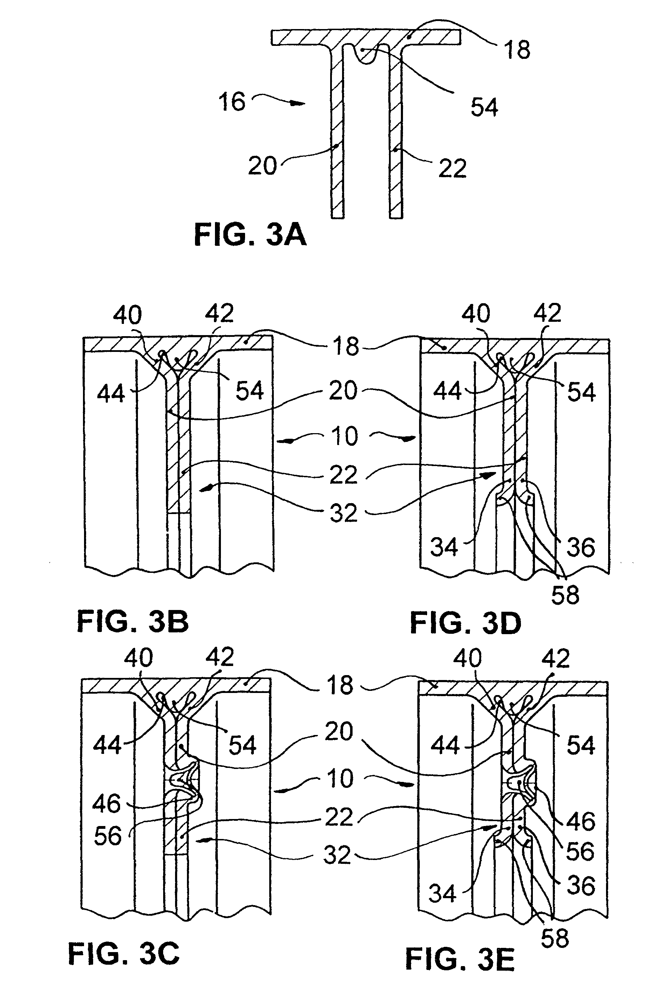

In Fig. 3A ist ein Halbzeug in Form eines doppelstegigen T-Profils 16 im Schnitt dargestellt, wie es zur Ausbildung der Bremsbacke 10 gemäß dem zweiten und dritten Ausführungsbeispiel Verwendung findet. Im folgenden werden das zweite und dritte Ausführungsbeispiel nur hinsichtlich ihrer sich vom ersten Ausführungsbeispiel unterscheidenden Merkmale beschrieben.

Gemäß Fig. 3A ist der Fußabschnitt 18 des doppelstegigen T-Profils 16 zwischen den Stegabschnitten 20, 22 mit einer Materialaufwerfung 54 versehen, die leicht beim Strangpressen des doppelstegigen T-Profils 16 mit geformt werden kann. Die Materialaufwerfung 54 ist symmetrisch bezüglich einer Mittelebene des doppelstegigen T-Profils 16 ausgebildet, die sich senkrecht zum Fußabschnitt 18 erstreckt, und weist einen im wesentlichen halbkreisförmigen Querschnitt auf, wobei die Seitenflächen der Materialaufwerfung 54 mit dem Fußabschnitt 18 einen Winkel einschließen, der etwas größer ist als 90°. Die Seitenflächen der Materialaufwerfung 54 gehen mit einem Übergangsradius in den Fußabschnitt 18 über.

Wie den Fig. 3B bis 3E zu entnehmen ist, ist die Materialaufwerfung 54 nach Biegen und Drücken bzw. Stauchen des doppelstegigen T-Profils 16 in dem Hohlraum 44 zwischen den Basisabschnitten 40, 42 der Stegabschnitte 20, 22 aufgenommen, wobei die Stegabschnitte 20, 22 mit ihren Basisabschnitten 40, 42 linienförmig an der Materialaufwerfung 54 anliegen. Bei dieser Ausbildung der Bremsbacke 10 wird die über den Verbundsteg 32 für einen Bremsvorgang eingeleitete Kraft verzweigt, was eine Krafterhöhung erlaubt und einem Einknicken der Bremsbacke 10 im Bereich des Hohlraum 44 entgegenwirkt.

Wie in den Fig. 3C und 3E zu erkennen ist, sind auch bei dem zweiten und dritten Ausführungsbeispiel der Bremsbacke 10 die Stegabschnitte 20, 22 im Bereich des Verbundstegs 32 durch mindestens einen Verbindungspunkt 46 miteinander verbunden. Der hier dargestellte Verbindungspunkt 46 ist mittels Stanznieten ausgebildet, wobei sich ein Einlegeteil 56 durch die Stegabschnitte 20, 22 hindurch erstreckt und diese im wesentlichen formschlüssig verbindet.

Das in den Fig. 3D und 3E dargestellte dritte Ausführungsbeispiel der Bremsbacke 10 unterscheidet sich von dem in den Fig. 3B und 3C dargestellten zweiten Ausführungsbeispiel der Bremsbacke 10 dadurch, daß beim Biegen und Drücken bzw. Stauchen des doppelstegigen T-Profils 16 die Stegabschnitte 20, 22 an ihren vom Fußabschnitt 18 abgewandten Enden 34, 36 nach außen ausgestellt werden. Die so ausgebildeten, abgewinkelten Stegrandbereiche 58 gehen mit einem geeigneten Übergangsradius in die Enden 34, 36 der Stegabschnitte 20, 22 über und dienen der zusätzlichen Aussteifung der Bremsbacke 10.

Obgleich in den Figuren nicht dargestellt, können zur Erhöhung der Verwindungssteifigkeit der Bremsbacke 10 anstelle der Stegrandbereiche 58 oder zusätzlich dazu die im Querschnitt äußeren Enden des Fußabschnitts 18 nach radial innen abgewinkelt werden.

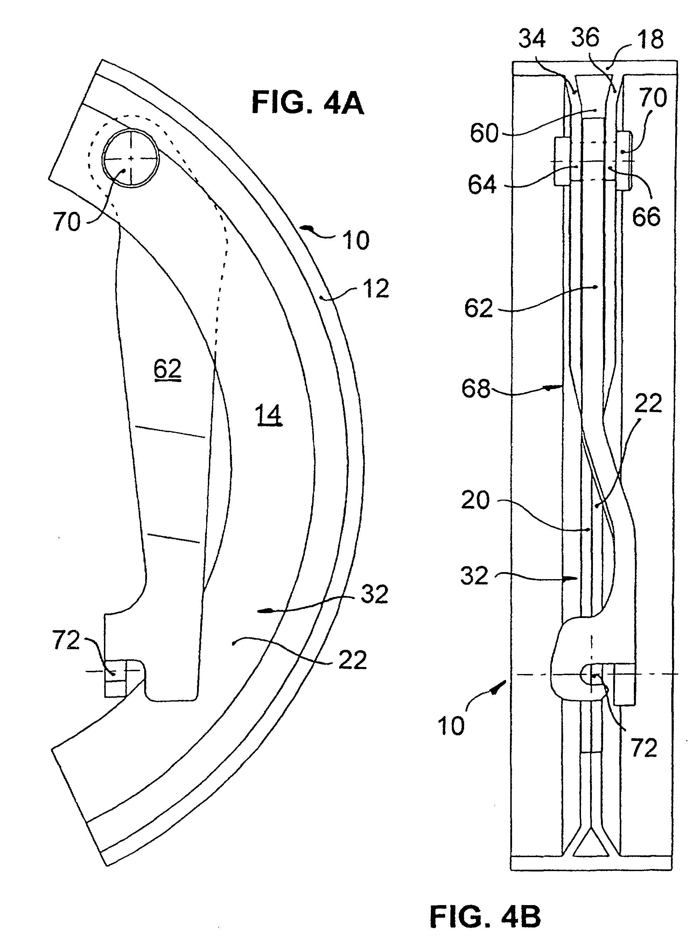

Die Fig. 4A und 4B zeigen das vierte Ausführungsbeispiel der Bremsbacke 10 in einer vereinfachten Darstellung. Auch an dieser Stelle sollen nur die sich von den vorhergehenden Ausführungsbeispielen unterscheidenden Merkmale beschrieben werden.

Gemäß Fig. 4B verlaufen die vom Fußabschnitt 18 abgewandten Enden 34, 36 der Stegabschnitte 20, 22 über eine vorbestimmte Strecke beabstandet voneinander und begrenzen im oberen Teil der Fig. 4B zu beiden Seiten eine Öffnung 60. In der Öffnung 60 ist ein Handbremshebel 62 aufgenommen, der an in den Stegabschnitten 20, 22 ausgebildeten Lagerstellen 64, 66 gelagert ist, die zusätzlich mit einer Armierung in Form einer Stahlbuchse (nicht dargestellt) versehen sein können. Die Öffnung 60 läuft über einen Übergangsabschnitt 68 in dem Verbundsteg 32 der Bremsbacke 10 aus.

Der Handbremshebel 62 ist mittels eines Stifts 70 an der Bremsbacke 10 angelenkt, der sich durch die Stegabschnitte 20, 22 hindurch erstreckt. Schließlich ist der Handbremshebel 62 in Längserstreckungsrichtung im wesentlichen mittig abgekröpft und hat an seinem von den Lagerstellen 64, 66 abgewandten Ende ein Befestigungsauge 72, über das in an sich bekannter Weise ein Seilzug (nicht dargestellt) der Handbremse am Handbremshebel 62 befestigt werden kann.

Durch diese bezüglich der Bremsbacke 10 bzw. deren Bremsbelagträger 12 in axialer Richtung mittige Anlenkung des Handbremshebels 62 wird vermieden, daß bei Betätigung der Handbremse über den Handbremshebel 62 ein Torsionsmoment in die Bremsbacke 10 eingeleitet wird.

Es wird eine Bremsbacke, insbesondere für eine Innenbacken-Trommelbremse für Kraftfahrzeuge, offenbart, die einen gekrümmten Bremsbelagträger und eine sich davon weg erstreckende Aussteifung aufweist. Die Bremsbacke ist aus einem Halbzeug in Form eines doppelstegigen T-Profils gebildet, dessen Fußabschnitt den Bremsbelagträger ausbildet. Erfindungsgemäß besteht die Aussteifung aus den zwei Stegabschnitten des doppelstegigen T-Profils, die an ihren vom Fußabschnitt abgewandten Enden unter Ausbildung eines Verbundstegs zumindest bereichsweise flächig aneinanderliegen und mit dem Fußabschnitt einen Hohlraum begrenzen. Durch diese Ausbildung wird eine Bremsbacke geschaffen, die bei ausreichender Festigkeit bzw. Steifigkeit im Vergleich zum Stand der Technik einfacher hergestellt werden kann.

### Bezugszeichenliste

- 10: Bremsbacke
- 12: Bremsbelagträger
- 14: Aussteifung
- 16: doppelstegiges T-Profil
- 18: Fußabschnitt
- 20: Stegabschnitt
- 22: Stegabschnitt
- 24: Ende
- 26: Ende
- 28: Ausnehmung
- 30: Loch
- 32: Verbundsteg
- 34: Ende
- 36: Ende
- 38: radial äußerer Abschnitt
- 40: Basisabschnitt
- 42: Basisabschnitt
- 44: Hohlraum
- 46: Verbindungspunkt
- 48: Trägerfläche
- 50: Übergangsradius
- 52: Übergangsradius
- 54: Materialaufwerfung
- 56: Einlegeteil
- 58: Stegrandbereich
- 60: Öffnung
- 62: Handbremshebel
- 64: Lagerstelle
- 66: Lagerstelle
- 68: Übergangsabschnitt
- 70: Stift
- 72: Befestigungsauge

## Patentansprüche

1. Bremsbacke (10), insbesondere für eine Innenbacken-Trommelbremse für Kraftfahrzeuge, mit einem gekrümmten Bremsbelagträger (12) und einer sich davon weg erstreckenden Aussteifung (14), wobei die Bremsbacke (10) aus einem Halbzeug in Form eines doppelstegigen T-Profils (16) gebildet ist, dessen Fußabschnitt (18) den Bremsbelagträger (12) ausbildet, **dadurch gekennzeichnet, daß** die Aussteifung (14) aus den zwei Stegabschnitten (20, 22) des doppelstegigen T-Profils (16) besteht, die an ihren vom Fußabschnitt (18) abgewandten Enden (34, 36) unter Ausbildung eines Verbundstegs (32) zumindest bereichsweise flächig aneinanderliegen und mit dem Fußabschnitt (18) einen Hohlraum (44) begrenzen.

2. Bremsbacke (10) nach Anspruch 1 **dadurch gekennzeichnet, daß** die Stegabschnitte (20, 22) an ihren vom Fußabschnitt (18) abgewandten Enden (34, 36) abgewinkelte Stegrandbereiche (58) aufweisen.

3. Bremsbacke (10) nach Anspruch 1 oder 2, **dadurch gekennzeichnet, daß** die Stegabschnitte (20, 22) form- und/oder kraftschlüssig miteinander verbunden sind.

4. Bremsbacke (10) nach Anspruch 3, **dadurch gekennzeichnet, daß** die Stegabschnitte (20, 22) mit zumindest einem klammerförmigen Armierungselement aus Stahl verbunden sind, das vorzugsweise in einer Ausnehmung (28) für eine Druckstange einer Feststellbremse und/oder an einem Krafteinleitungsabschnitt (24) für einen Kolben eines Radbremszylinders und/oder an einem Anlageabschnitt (26) für ein Widerlager angeordnet ist.

5. Bremsbacke (10) nach Anspruch 3 oder 4, **dadurch gekennzeichnet, daß** die Stegabschnitte (20, 22) im Bereich des Verbundstegs (32) mittels mindestens eines durch Durchsetzfügen oder Stanznieten ausgebildeten Verbindungspunkts (46) verbunden sind.

6. Bremsbacke (10) nach einem der vorhergehenden Ansprüche, **dadurch gekennzeichnet, daß** der Fußabschnitt (18) zwischen den Stegabschnitten (20, 22) mit einer Materialaufwerfung (54) versehen ist, an der die Stegabschnitte (20, 22) zumindest linienförmig anliegen, wobei die Materialaufwerfung (54) vorzugsweise einen im wesentlichen halbkreisförmigen Querschnitt aufweist.

7. Bremsbacke (10) nach einem der vorhergehenden Ansprüche, **dadurch gekennzeichnet, daß** die vom Fußabschnitt (18) abgewandten Enden (34, 36) der Stegabschnitte (20, 22) zumindest bereichsweise beabstandet voneinander verlaufen und eine Öffnung (60) zur Aufnahme eines Handbremshebels (62) begrenzen, der an in den Stegabschnitten (20, 22) ausgebildeten Lagersteilen (64, 66) gelagert ist.

8. Bremsbacke (10) nach einem der vorhergehenden Ansprüche, **dadurch gekennzeichnet, daß** die Stegabschnitte (20, 22) im Querschnitt des Halbzeugs mit Übergangsradien (50, 52) in den Fußabschnitt (18) übergehen, wobei die zwischen den Stegabschnitten (20, 22) liegenden Übergangsradien (50) kleiner sind als die äußeren Übergangsradien (52).

9. Bremsbacke (10) nach einem der vorhergehenden Ansprüche, **dadurch gekennzeichnet, daß** das doppelstegige T-Profil (16) aus einer Aluminiumlegierung, vorzugsweise einer AluminiumKnetlegierung besteht und stranggepreßt ist.

10. Bremsbacke (10) nach Anspruch 9, **dadurch gekennzeichnet, daß** der Bremsbelagträger (12) und die Aussteifung (14) anodisch oxydiert sind.

## Claims

1. Brake shoe (10), in particular for an internal-expanding drum brake for motor vehicles, with a curved brake lining carrier (12) and a stiffening (14), which extends away from the latter, wherein the brake shoe (10) is constituted by a semifinished product in the form of a double-webbed T-section (16), the base portion (18) of which forms the brake lining carrier (12), **characterised in that** the stiffening (14) consists of the two web portions (20, 22) of the double-webbed T-section (16), which portions lie flatly against one another, at least in certain regions, at their ends (34, 36) which are remote from the base portion (18), while forming a composite web (32), and define a cavity (44) with the base portion (18).

2. Brake shoe (10) according to Claim 1, **characterised in that** the web portions (20, 22) comprise bent web edge regions (58) at their ends (34, 36) which are remote from the base portion (18).

3. Brake shoe (10) according to Claim 1 or 2, **characterised in that** the web portions (20, 22) are positively and/or non-positively connected together.

4. Brake shoe (10) according to Claim 3, **characterised in that** the web portions (20, 22) are connected to at least one clamp-shaped steel reinforcing element, which is preferably disposed in a recess (28) for a plunger rod of a parking brake and/or at a force-introducing portion (24) for a piston of a wheel brake cylinder and/or at a contact portion (26) for an abutment.

5. Brake shoe (10) according to Claim 3 or 4, **characterised in that** the web portions (20, 22) are connected in the region of the composite web (32) by means of at least one connection point (46) formed by through-joining or punch riveting.

6. Brake shoe (10) according to any one of the preceding Claims, **characterised in that** the base portion (18) is provided with a material elevation (54) between the web portions (20, 22), against which elevation the web portions (20, 22) lie, at least in linear fashion, wherein the material elevation (54) preferably has a substantially semicircular cross section.

7. Brake shoe (10) according to any one of the preceding Claims, **characterised in that** the ends (34, 36) of the web portions (20, 22) which are remote from the base portion (18) extend at a spacing from one another, at least in certain regions, and define an opening (60) for accommodating a hand brake lever (62), which is mounted at bearing points (64, 66) formed in the web portions (20, 22).

8. Brake shoe (10) according to any one of the preceding Claims, **characterised in that** the web portions (20, 22) pass into the base portion (18) in the cross section of the semifinished product with transition radii (50, 52), wherein the transition radii (50) lying between the web portions (20, 22) are smaller than the outer transition radii (52).

9. Brake shoe (10) according to any one of the preceding Claims, **characterised in that** the double-webbed T-section (16) consists of an aluminium alloy, preferably a wrought aluminium alloy, and is extruded.

10. Brake shoe (10) according to Claim 9, **characterised in that** the brake lining carrier (12) and the stiffening (14) are anodized.

## Revendications

1. Mâchoire de frein (10), en particulier pour un frein à tambour à mâchoires intérieures pour véhicules automobiles, avec un support de garniture de frein courbe (12) et un raidisseur (14) qui s'étend à l'opposé de celui-ci, la mâchoire de frein (10) étant formée à partir d'un produit semi-fini en forme de profilé en T à deux âmes (16) dont la section de base (18) forme le support de garniture de frein (12), **caractérisée en ce que** le raidisseur (14) se compose des deux sections d'âme (20, 22) du profilé en T à deux âmes (16), qui sont appliquées à plat l'une contre l'autre au moins dans certaines zones, à leurs extrémités (34, 36) opposées à la section de base (18), en formant une âme combinée (32), et qui définissent avec la section de base (18) une cavité (44).

2. Mâchoire de frein (10) selon la revendication 1, **caractérisée en ce que** les sections d'âme (20, 22) présentent, à leurs extrémités (34, 36) opposées à la section de base (18), des zones de bordure d'âme coudées (58).

3. Mâchoire de frein (10) selon la revendication 1 ou 2, **caractérisée en ce que** les sections d'âme (20, 22) sont reliées par complémentarité de forme et/ou par force.

4. Mâchoire de frein (10) selon la revendication 3, **caractérisée en ce que** les sections d'âme (20, 22) sont reliées à au moins un élément d'armature en forme de crochet en acier qui est disposé de préférence dans un creux (28) pour une barre de compression d'un frein de blocage et/ou sur une section d'introduction de force (24) pour un piston de cylindre de frein sur roue et/ou sur une section d'application (26) pour une butée.

5. Mâchoire de frein (10) selon la revendication 3 ou 4, **caractérisée en ce que** les sections d'âme (20, 22) sont reliées dans la zone de l'âme combinée (32) à l'aide d'au moins un point de liaison (46) formé par assemblage par pénétration ou par découpage et rivetage.

6. Mâchoire de frein (10) selon l'une des revendications précédentes, **caractérisée en ce que** la section de base (18) est pourvue, entre les sections d'âme (20, 22), d'une accumulation de matière (54) contre laquelle lesdites sections d'âme (20, 22) sont appliquées au moins linéairement, cette accumulation de matière (54) présentant de préférence une section transversale pratiquement semi-circulaire.

7. Mâchoire de frein (10) selon l'une des revendications' précédentes, **caractérisée en ce que** les extrémités (34, 36) des sections d'âme (20, 22) opposées à la section de base (18) sont espacées au moins par zones et délimitent une ouverture (60) destinée à recevoir un levier de frein à main (62) qui est monté au niveau de points de montage (64, 66) formés dans les sections d'âme (20, 22).

8. Mâchoire de frein (10) selon l'une des revendications précédentes, **caractérisée en ce que** dans la section transversale du produit semi-fini, la transition entre les sections d'âme (20, 22) et la section de base (18) présente des rayons de transition (50, 52), les rayons de transition (50) situés entre les sections d'âme (20, 22) étant inférieurs aux rayons de transition extérieurs (52).

9. Mâchoire de frein (10) selon l'une des revendications précédentes, **caractérisée en ce que** le profilé en T à deux âmes (16) se compose d'un alliage d'aluminium, de préférence un alliage corroyé d'aluminium, et est extrudé.

10. Mâchoire de frein (10) selon la revendication 9, **caractérisée en ce que** le support de garniture de frein (12) et le raidisseur (14) sont anodisés.
